# EUROPEAN PATENT APPLICATION

(11) **EP 2 077 147 A1**
(43) Date of publication of application: **08.07.2009**
(21) Application number: 08000098.7
(22) Date of filing: 04.01.2008
(51) Int. Cl.: B01J 2/16

(54) **Fluid bed granulation process and apparatus**

(71) Applicant: UREA CASALE S.A., 6900 Lugano-Besso (CH)
(72) Inventor: Zardi, Federico, 6932 Breganzona (CH)
(74) Representative: Zardi, Marco

(57) **Abstract**

A fluid bed granulation process and apparatus, wherein a suitable fluid bed of a particulate material is maintained in a granulator (1) fed by an input flow (F) comprising a growth liquid (L) and by a flow (S1) of seeds adapted to promote the granulation, and wherein a part (F2) of said input flow (F) is taken upstream the feeding of the fluid bed, and used in a seeds generator (33), to produce the seeds for the fluid bed.

## Description

### Field of application

The present invention relates to a process and apparatus for fluid-bed granulation. More in detail, the invention relates to a process and apparatus wherein a fluid flow containing a given substance is converted into solid granules of said substance, with a certain degree of purity, by a growing process which takes place under a fluid bed condition.

### Prior Art

A fluid-bed granulation process is carried out by maintaining granules in a fluidized state (e.g. by blowing air) and progressively coating and enlarging the granules by spraying or atomizing an appropriate growth liquid made of the substance to be granulated or of a solution thereof. Small solid particles (typically less than 2 mm diameter) of the same or another substance, called seeds, are also fed to the fluid bed, to promote the granulation working as starting points for the progressive deposition of the growth liquid.

The process, in essential terms, takes place by droplets of the growth liquid wetting, sticking and solidifying on the seeds and granules which, together, form the fluid bed. Said process is used for the granulation of substances like for example urea, ammonium nitrate, ammonium chloride and others.

In general terms, one goal of the process is to form granules approaching a predetermined ideal shape (e.g. spherical) in the best possible way; another goal is to have dimension and mass of the granules as constant as possible, that is to approach a "monodispersed" product. That is, the statistical distribution of the dimension and mass of the granules should be centered on theoretical desired values with a deviance as little as possible.

Efficient wetting of both the seeds and the growing granules by the growth liquid is necessary to achieve the above goals. And, moreover, the growth liquid must be fed to the fluid bed in the form of very small droplets, smaller than seeds and growing granules forming the fluid bed. The size of the droplets of the growth liquid is also crucial to allow the evaporation of any solvent that may be contained in the growth liquid and may remain as impurity in the final product. With regard to granulation of urea, wherein the growth liquid is substantially an aqueous solution of urea, smaller droplets enhance the evaporation of water and obtainment of high purity granules of solid urea, which are much more valuable.

US-A-4353730 discloses a prior-art process and apparatus for granulation, where the growth liquid is fed in atomized form. Said process however has recognized drawbacks, including: a substantial impossibility of controlling dispersion of the particle size of the finished product; the need of screening the produced granules; a considerable waste of granules of unacceptable size (too big or too little); recovery of such waste granules and their recycle upstream to the granulation process.

The granules exiting the fluid bed are subjected to a screening in order to separate granules which do not meet the dimensional requirements of the final product. The so obtained waste granules are recycled as growing seeds for the fluid bed itself.

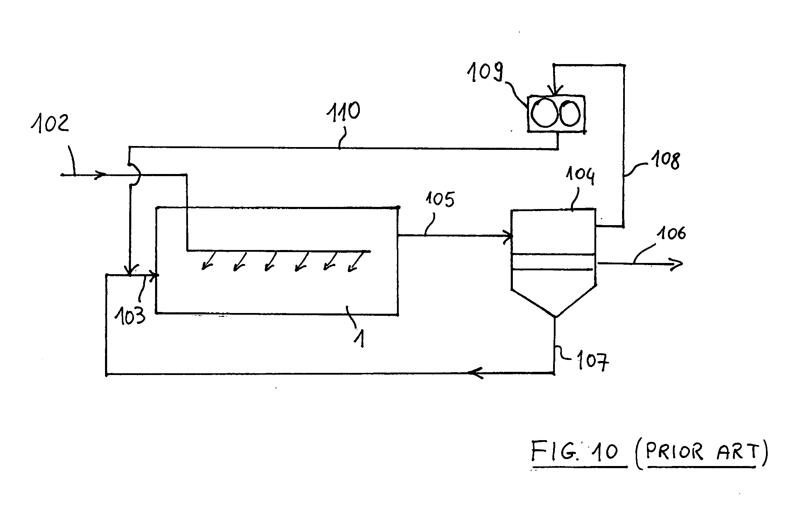

A prior-art granulation process of this type is shown in a schematic way in Fig. 10. A fluid bed granulator 1 is fed with a growth liquid substance via flow line 102, and with an appropriate flow of seeds via a seeds feeding line 103. The granules produced in the granulator 1 are fed to a separator 104, via output flow line 105. Granules within the range of acceptance, which constitutes the final product, are discharged through line 106; granules too big or, respectively, too small, are discharged through lines 107 and 108. The bigger granules of line 108 are crushed in a device 109 obtaining small particles (line 110) which, together with granules of line 107, are recycled to seeds feeding line 103.

In other words, the seeds to fluid bed granulator 1 are obtained by recycling waste granules taken from the output of granulator 1 itself. The separator 104, hence, performs a double task to screen the output of the fluid bed, obtaining the flow 106 of the final product, and to provide the seed flow to line 103 which is indispensable for fluid bed granulator 1 to operate. It should be noted that the recycled waste portion of granules (lines 107 and 108) can be up to 50%, and typically 30-35%, of output 105 of the granulator 1.

WO 02/083320 discloses a much more effective process for granulation and a related fluid-bed granulator, providing inter alia the formation of a vortex condition in the fluid bed, and wherein substantially monodispersed granules are obtained at the output of the fluid bed, that is substantially all granules exiting the fluid bed are within the dimensional range of acceptance of the final product. The layout of Fig. 10, however, requires that a portion of the produced granules is recycled at the fluid bed input as seeds for the granulation process. Hence, the use of a fluid bed granulator according to WO 02/083320 with the known layout of Fig. 10 has the limitation that part of the product (line 105), which would be ready for sale, needs to be recycled back to the process.

Summarizing, a fluid bed granulation process of a given substance, according to the known art, comprises the following basic steps:
- providing a fluid bed of a particulate material comprising granules of said substance and solid particles of an appropriate substance working as seeds for the granulation process;
- feeding an input flow, comprising a growth liquid containing said substance, to said fluid bed;
- feeding a flow of said seeds into the fluid bed, to promote the growth of granules and to maintain the fluidized mass;
- using a portion of the granules at the output of the fluid bed to obtain the seeds for the fluid bed.

As stated above, there is a need to continuously improve the granulation processes and apparatuses, especially for some products (like e.g. urea) whose market value is strongly influenced by the granulometry and especially by uniform shape, dimension and mass of the granules.

### Summary of the invention

The problem underlying the present invention is to devise and to make available a fluid bed granulation process and apparatus adapted to overcome the above drawbacks and limitations of the prior art; to obtain granules of the desired substance with a controlled granulometry; to reduce the waste product; to simplify layout of the granulation facility.

This problem is solved by a fluid bed granulation process of a given substance, comprising the steps of:
- providing a fluid bed of a particulate material comprising granules of said substance and solid particles of an appropriate substance working as seeds for the granulation process;
- feeding an input flow, comprising a growth liquid containing said substance, to said process;
- feeding a flow of said seeds into the fluid bed, to promote the growth of granules and to maintain the fluidized mass;
- taking a flow of solid granules as output of the process carried out in the fluid bed;
characterized in that a first portion of said input flow is fed directly to the fluid bed, and a second portion of said input flow is used to generate at least a part of said amount of solid seeds.

Said second portion of the input flow is preferably a minor portion of the input fluid flow and, more preferably, the ratio between said second portion and the total input flow is related to volume ratio between seeds and granules of the end product. According to an aspect of the invention, said ratio between the second portion of the input flow and the total input flow is equal to d³/D³, where d is the mean value of a characterizing dimension of the seeds, and D is the mean value of a characterizing dimension of the solid granules obtained at the output of the fluid bed. In practice, the granules and the seeds substantially approach a spherical shape, and are schematised as spheres; following this model, d is the mean diameter of the seeds and D is the mean diameter of the granules.

Preferably, said second portion of the input flow is used to generate the total amount of solid seeds fed to the fluid bed, and the output flow of solid granules is not further used to generate seeds; the option to use the produced granules for generating seeds however is not excluded.

According to an aspect of the invention, the growth liquid contained in said second portion of the input flow is solidified in a suitable and per se known process, outside the fluid bed where granulation takes place, obtaining solid seeds which are then fed to appropriate zone(s) of the fluid-bed itself.

According to one embodiment, the second portion of the input flow is solidified by depositing liquid drops on a cooled conveyor belt, according to a per se known technique, obtaining solid pastilles with a suitable diameter (e.g. 2 mm or less) which constitute the seeds of the granulation process. According to another embodiment, said second portion of the input flow is fed to a vertical prilling tower. The process carried out in said prilling tower may for example comprise the following steps: a downward flow of small liquid droplets is produced by feeding the liquid input flow to a prilling device such as one or more prilling bucket(s) or prilling showers on top of the tower; a flow of cooling air is established inside the tower, so that the droplets falling across the tower are cooled and solidified; solid prills are taken from the bottom of the tower and the used as seeds for the fluid-bed granulation.

The first portion of the input flow is directly fed to appropriate zone(s) of the fluid bed and in a suitable form, such as atomized or sprayed.

In a first embodiment, the process is carried out in a substantially horizontal (longitudinal) fluid bed, with the first portion of input flow entering the fluid bed along a continuous, longitudinal feeding line on one or both sides of the same fluid bed.

In a second embodiment, the input fluid flow is fed in a discontinuous manner, that is on predetermined feeding zones, aligned in a main flow direction of the fluid bed, and alternate to non-feeding zones of the fluid bed wherein the input fluid flow is not fed. Said feeding zones act substantially as wetting zones of the particulate material by the input flow, and said non-feeding zones act substantially as drying and consolidation zones of the growing particles. This will be more evident with the help of the detailed description given below.

Preferably, a vortex condition is induced and maintained in the fluid bed. Accordingly, a fluidification flow of a gaseous medium, such as air, is provided to the fluid bed in a non-homogeneous way in order to form and maintain the vortex condition. More preferably, the input flow is fed below the free surface of the fluid bed and, even more preferably, in the proximity of said free surface of said fluid bed.

According to a preferred embodiment of the invention, and thanks also to the adoption of the above described fluid-bed configuration, the output of the fluid bed can be taken directly as the final product, with no screening/ separation of the granules.

The vortex condition of the fluid bed can be realized with a transversal vortex or a double transversal vortex arrangement, meaning that the vortex has an axis substantially parallel to a main flow direction of the fluid bed.

An object of the invention is also a fluid bed granulator adapted to operate according to the above process. More in detail, an object of the invention is a fluid bed granulator comprising at least a container for a fluid bed and feeding means of an input flow containing a suitable growth substance, characterized by said feeding means comprising first feeding means for directly feeding the fluid bed with the growth liquid, and second feeding means connected to a seed generator, the output of said seed generator being connected to the fluid bed.

Said seed generator can be arranged, for example, as a cooled conveyor belt or a compact prilling tower.

The invention provides that seeds for the granulation process are generated directly from the "fresh" input flow containing the growth liquid, i.e. taking a part of said liquid, solidifying that part in the form of small spherical granules or pastilles, and feeding them to the fluid bed downward, instead of taking waste solid granules from the output of the fluid bed, crushing them to the required size, if appropriate, and re-feeding them to the fluid bed.

It has been found that this way of producing the seeds allows to obtain granules that more closely approach the ideal spherical shape, due to more regular shape of the seeds, and therefore to obtain a better final product. In particular, the combination of generation of seeds from the fresh growth liquid, and fluid bed with transversal vortex as above disclosed, is very effective and allows to directly take the output of the fluid bed as the final product, without the need of a separator or, in any case, with a negligible waste. The layout of the system is also simplified, especially downstream the fluid-bed granulator, without the need of the systems for crushing and/or recycling waste granules.

The above embodiments of the fluid-bed, especially the fluid bed with feeding zones alternate to non-feeding zones, produce substantially monodispersed granules (that is, granules polidispersed in a very little range), thus giving a product directly marketable. This is a substantial advantage over prior art processes, where a comparable commercial product can only be obtained by screening the output of the granulator, and recycling about 30-35% of said output as milled oversize or undersize granules.

Further characteristics and the advantages of the invention will be better shown from the description of illustrative and non limiting embodiments of a granulation process according to the invention, said description being made hereinafter with reference to the enclosed drawings.

### Description of the drawings

Fig. 1 is a scheme of a granulation apparatus operating according to the invention.
Fig. 2 and 3 are schemes of a component of apparatus of Fig. 1, according to alternative embodiments.
Figs. 4 and 5 are a view and a longitudinal section of the fluid-bed granulator of apparatus of Fig. 1, according to one embodiment of the invention.
Figs. 6 is a cross sections of the granulator of Figs. 4 and 5, showing the vortex of the fluid bed.
Fig. 7 is a cross sections of a variant of the granulator of Figs. 4 and 5.
Figs. 8 and 9 are a view and a longitudinal section of the fluid-bed granulator of apparatus of Fig. 1, according to another embodiment of the invention.
Fig. 10 is a scheme of a granulation apparatus operating according to the known art.

### Detailed description of preferred embodiments

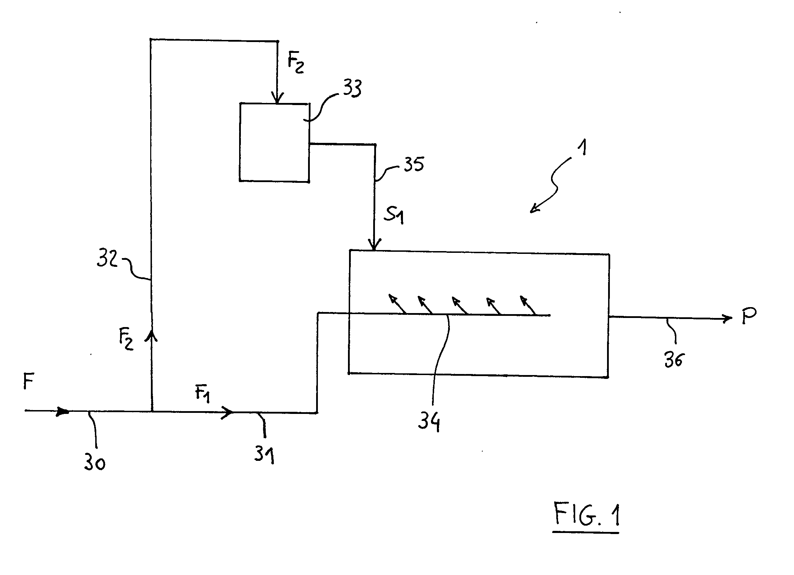

With reference to Fig. 1, a process according to the invention is carried out by forming a fluid-bed of a particulate material inside a granulator 1, fed with an input flow F of an appropriate growth liquid via a feeding line 30.

Feeding line 30 is divided into a first line 31 connected to granulator 1 and a second line 32 connected to a seed generator 33. Preferably, the first line 31 carries a major flow portion F1 of the input flow F, while a minor portion F2 is fed to the seeds generator 33 via line 32.

The flow portion F1 of the growth liquid is fed to the fluid bed formed inside the granulator 1 along a feeding longitudinal line 34, on one or both sides of the granulator 1 itself, continuously or in selected discrete zones.

The output of seeds generator 33 is a flow S1 of solid granules or pastilles, obtained by the solidification of the growth liquid, or of the substance to be granulated contained in said liquid. Said flow S1 of solid granules or pastilles is fed from generator 33 to the granulator 1 via line 35. The seeds produced in said generator 33 are of appropriate size to work as seeds into the fluid bed, e.g. spheres having a diameter of about 1 - 1.5 mm or less.

Output 36 of granulator 1 can be connected to means for screening or separating the solid granules, or can be directly taken as the final product of the granulation.

Preferably, the flow portion F2 is such that the ratio between said flow portion F2 and the total input flow F is equal to d³/D³, where d is the mean diameter of seeds produced in generator 33 and fed to the granulator 1, and D is the mean diameter of the solid granules obtained at the output 36 of the granulator 1. In other words, and referring to Fig. 1, the ratio between flow rate through line 32 and flow rate through line 30 is equal to d³/D³ as defined above.

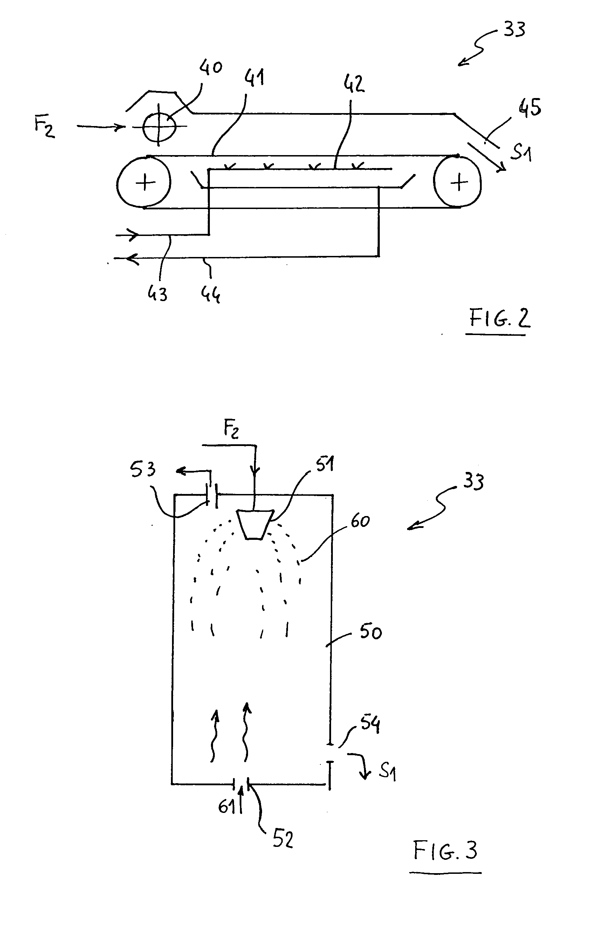

Fig. 2 shows, in a simplified manner, an embodiment of the seeds generator 33. The flow portion F2 of growth liquid, through the line 32, is fed to a rotary former 40, depositing small droplets on the outer surface of a cooled steel belt 41. The opposite inner surface of belt 41 is cooled by an internal cooling circuit, for example by a sprayer 42 connected to a cooling water feeding 43 and return 44. The cooled surface of belt 40 promotes the solidification of the liquid, forming solid pastilles which are taken from a discharge section 45, at the opposite end of the rotary former 40, and form the output flow S 1 of generator 33 directed to granulator 1.

Figs. 3 is a sketch of another embodiment of the generator 33, realized as a compact prilling tower. More in detail, the generator 33 of this another embodiment comprises a vertical tower 50 with a prilling bucket 51 installed on the top. The bucket 51 has a perforated side wall and is connected to a driving shaft for rotation around the vertical axis. The portion L2 of growth liquid is fed to the bucket 51, producing a flow 60 of small droplets, ejected by the perforated side wall of the bucket 51 and flowing down to the bottom of the tower 50.

Cooling air 61 enters the tower 50 at a bottom duct 52 and exits at a top discharge duct 53, thus flowing in counter-current relative to the droplets flow 60. The droplets are solidified by the action of said cooling air, and taken at a bottom exit 54 of the tower 50, forming the seeds flow 35.

It should be noted that the above systems are per se known, and thus they are not described in greater detail. In other (not shown) embodiments, the prilling tower of Fig. 3 can be equipped with one or more prilling showers, such as vibrating showers, which are known per se and thus not described in detail; the cooling flow inside the tower, moreover, can be co-current with the liquid droplets.

The fluid-bed granulator 1 is now described with reference to preferred embodiments.

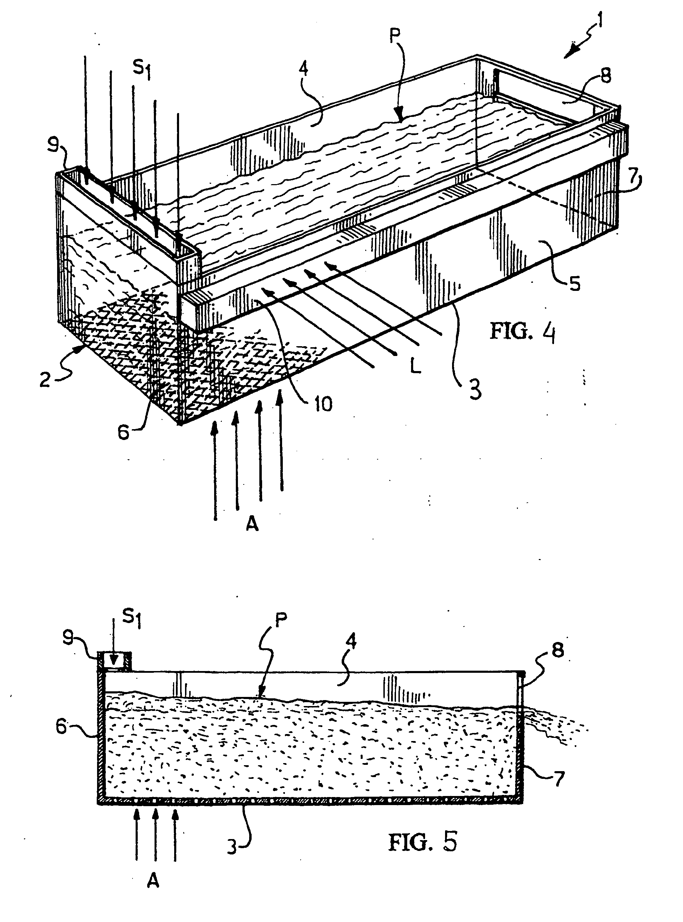

In a first embodiment of Figs. 4 to 7, the fluid bed granulator 1 essentially comprises a horizontal container 2 with: a bottom part 3, permeable to gas, for example made up of a perforated element; two opposite long side walls 4, 5; a head wall 6 and a discharge wall 7.

The discharge wall 7 is provided with a top opening 8 for discharging the (granulated) final product and fixing the maximum height of the fluid bed. Other appropriate discharge means may be used such as for example an automatic valve operated by the fluid bed level.

A feeder 9 is installed at the upper side of the head wall 6, receiving the flow S1 of seeds produced in said device 33, and providing uniform distribution of the seeds along head wall 6. Feeder 9 is per se conventional and therefore need not be described in detail.

A blowing system (not shown) is installed below the container 2, producing a flow of air A which creates and maintain the fluid-bed state of particulate material, comprising seeds and granules, inside the container 2, as well as a continuous vortex having a substantially horizontal axis. To this purpose, bottom part 3 of the container is perforated and is preferably provided with suitable conventional means for obtaining a non-homogeneous distribution of the air flow A into the container 2 (for example by dividing said flow A in fractions having different rates or by varying the entry direction of such a flow in the fluid bed), so as to create and maintain a vortex in the fluid bed.

In addition, the seeds S 1 can be advantageously pre-heated by the air flow A.

The continuous discharge through opening 8, counterbalanced by the continuous feeding of seeds S1, determines a longitudinal main flow or "fluid vein" of the fluid bed, from head wall 6 towards the opposite wall 7, the free surface P being slightly tilted down in the direction of the flowing bed (Fig. 5). According to this configuration, the seeds S1 are located only near the head of the granulator 1 (wall 6) while in the remaining part of the fluid bed is formed by the progressively growing granules.

Growth liquid L atomized and mixed with air, is introduced in container 2 via a side distributor 10, slightly below the free surface P of the fluid bed. The growth liquid L may be fed in atomized form and relatively diluted in a solvent. For instance, in the case of urea granules, the atomized growth liquid can contain molten urea from 94 %wt up to near 100 %wt (weight percent), the balance being water (solvent).

The distributor 10 extends along the whole length of container 2, providing a continuous and distributed supply of liquid L, transversal with respect to the flow of the fluid vein. In other words, the fluid bed is fed along a continuous, horizontal feeding line (line 34 of Fig. 1) corresponding to side distributor 10.

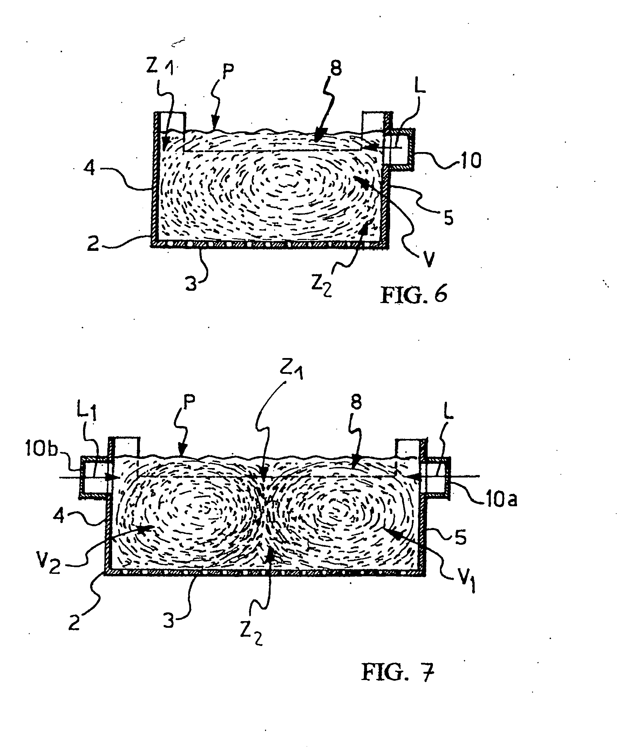

Due to the above arrangement, a continuous vortex V is formed and maintained in the fluid bed (Fig. 6). Vortex V is transversal, i.e. with axis substantially parallel to the length of the container 2 and, hence, to the direction of the main flow (fluid vein) through the fluid bed.

The distributor can be equipped with one side distributor 10 or two distributors 10a and 10b on opposite sides (Fig. 7) with liquid inputs L and L1, obtaining feeding of the fluid bed on two opposite and parallel feeding lines, and a configuration of the fluid bed itself with a double vortex arrangement, namely a vortex V1 substantially extended in a right portion of the fluid bed and another opposite vortex V2 substantially extended in the left portion. Senses of rotation of vortex V1 and V2 are opposite.

Figs. 6 and 7 show also upper zones Z1 of the fluid bed, where seeds are wetted by atomized liquid L and evaporation of possible solvent contained takes place, and lower zones Z2 where of solidification and consolidation of the growth liquid takes place.

Other details of the fluid bed granulator 1 can be provided according to WO 02/074427 or WO 2005/097309, which are incorporated herein by reference.

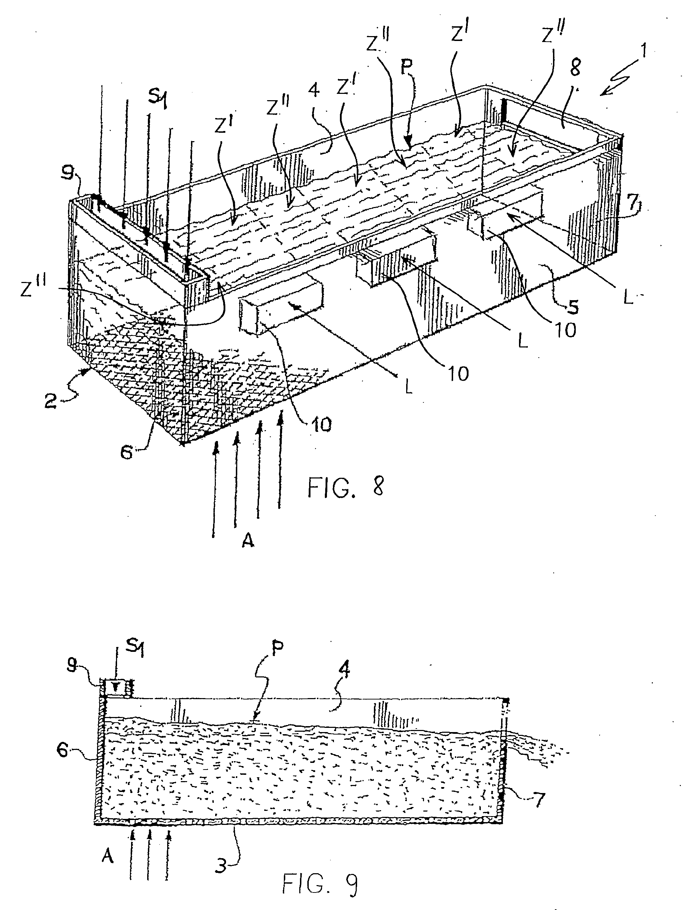

Figs. 8 and 9 relate to another embodiment, wherein the fluid bed is fed in discrete, predetermined zones. More in detail, the granulator 1 comprises a plurality of distributors 10 spanning over the length of one or both side walls 4, 5 and at a prearranged height from the bottom 3, below the free surface P of the fluid bed. Said distributors 10 provide a feeding of the fluid bed in discrete zones Z', alternate to non-feeding zones Z".

More in detail, each distributor 10 feeds the growth liquid L to a corresponding feeding zone Z' of the fluid bed substantially spanning over the entire transversal extension of the container 2, and being delimited longitudinally by portions of the long side walls 4 and 5 supporting the respective distributor 10. Said zones Z' are alternated with non-feeding zones Z" also substantially spanning over the entire transversal extension of the container 2 and being delimited longitudinally by portions of the long side walls 4, 5 separating two successive distributors 10.

The process starts and ends preferably in non-feeding zones Z", namely it is started in a zone Z" near the head wall 6, and ended in a last zone Z" close to the discharge wall 7.

A non-feeding zone Z" close to the head wall 6 (i.e. in the location of seeds S1) is also preferred to establish a regular vortex for the seeds S1 before they are wetted by the growth fluid.

Other features of the granulator of Fig. 8 and 9, including a blowing system of air A to maintain the fluid-bed state, and provision of vortex condition as seen in Figs. 6 or 7, can be provided substantially according to the above cited disclosures of WO 02/074427 and WO 2005/097309.

The granulation process which is carried out by the fluid bed is now briefly described.

In steady state conditions, seeds and growing granules inside container 2 are maintained in a fluidized (fluid-bed) condition by air flow A, crossing the bottom 3 and distributed inside the bed in a non-homogeneous manner so as to create and maintain vortex V.

The level of the fluid bed is determined by the discharge through opening 8 or an automatic discharge valve, following the main flow from head wall 6 towards the opposite wall 7.

It should further be noted that the air A carries out a thermal exchange with the growing granules that form such fluid bed heating itself progressively. Indeed, air A removes the solidification heat of a growth fluid fed onto the seeds S₁ and onto the growing granules.

The fluid-bed particles (granules or seeds) located in the upper layer of the fluid bed are hit and wetted many times with the particles of atomized growth liquid of flow L, with solidification of the substance and partial evaporation of the solvent that may be inside said growth liquid. As a consequence, temperature of the granules is increased in the relative (upper) zone of the fluid bed.

Referring for example to Fig. 6, the "wetted" granules are pushed towards the opposite wall 4 and deflect naturally towards the bottom 3 of the container 2, under the action of vortex V. In the course towards bottom 3, the granules leave the upper hot layer of the fluid bed crossing progressively colder layers. During this course the growth liquid is solidified and consolidated on the surface of the granules. This step is completed during the course of the granules, towards the wall 5; then the granules deflect near the wall 5 and again towards the upper hot layer of the fluid bed (Fig. 6).

The course described above is substantially repeated and the steps of wetting, solidification and evaporation are repeated with progressive mass and volume increase, during the path from wall 6 to wall 7 induced by the fluid vein (Fig. 5).

The embodiment of Fig. 7 make it possible to substantially double the production yield of the granulator, while keeping the same length of container and operating conditions of the fluid bed.

With reference to granulator of Figs. 8 and 9, non-feeding zones Z" (alternate to "wetting" zones Z') provide a drying of the granules by the air flow A, which allows substantial evaporation of the residual solvent of the growing liquid and recover of the solidification heat, thereby obtaining a further consolidation for the growing granules that advantageously improves their mechanical properties, in particular their hardness.

It can be stated that the fluid-bed particles gain volume and mass by traversing each zone Z', where they are subjected to wetting and solidification of growth liquid; the alternate, subsequent zone Z" provides a substantial drying and consolidation steps to increase hardness of the product. This embodiment of the invention with feeding and non-feeding zones Z', Z" is particularly preferred as the produced granules are substantially monodispersed, thus obtaining a product directly marketable, i.e. the output line 36 (Fig. 1) can be directed to storage of the final product, without screening. A screening can be provided anyway, but waste would be very little. It should be noted that the present invention, in this case, eliminates the need to use a part of the final product for seeds production, i.e. the process as a whole is more effective.

Particularly satisfactorily results, in the field of granulation of urea, are obtained feeding the flow L comprising the growth liquid (urea solution), in the zones Z' of the fluid bed, at a speed between 2 and 50 m/s, through a succession of 2 to 20 distributors 10 along a single long side wall of granulator 1. The distributor spacing between consecutive distributors may be the same or different depending on the substance to be granulated and it is preferably in the order of magnitude of the distributor length. A final product with 90% of the granules measuring from 2 to 4 mm diameter was obtained.

Together with the possibility of obtaining a final product of suitable granulometry, i.e. directly marketable, the invention allows to substantially reduce the investment and maintenance costs, as well as the energy consumption, of the corresponding granulating plant.

## Claims

1. A fluid bed granulation process of a given substance, comprising the steps of:
- providing a fluid bed of a particulate material comprising granules of said substance and solid particles of an appropriate substance working as seeds for the granulation process;
- feeding an input flow (F) comprising a growth liquid (L) containing said substance, to said process;
- feeding a flow (S1) of said seeds into the fluid bed, to promote the growth of granules and to maintain the fluidized mass;
- taking a flow of solid granules as output of the process carried out in the fluid bed;
**characterized in that** a first portion (F1) of said input flow (F) is fed directly to the fluid bed, and a second portion (F2) of said input flow (F) is used to generate at least a part of said flow (S1) of seeds.

2. A process according to claim 1, wherein said second portion (F2) is a minor portion of said input flow.

3. A process according to claim 2, wherein the ratio between said second portion (F2) and the input flow (F) is equal to D³/d³, where d is the mean value of a characterizing dimension of said seeds and D is the mean value of a characterizing dimension of the solid granules obtained at the output of the fluid bed.

4. A process according to any one of claims 1 to 3, wherein said second portion (F2) of the input flow is solidified by depositing liquid drops on a cooled conveyor belt (41), obtaining solid pastilles with a suitable diameter.

5. A process according to any one of claims 1 to 3, wherein said second portion (F2) of the input flow is solidified in a prilling tower (50).

6. A process according to any one of preceding claims, wherein said second portion (F2) of input flow is used to generate the full flow (S1) of seeds to the fluid bed.

7. A process according to claim 6, wherein the output flow (36) of the fluid bed is directly taken as final product of the granulation, without further screening and separation of waste granules.

8. A process according to any one of preceding claims, wherein said first portion (F1) of the input fluid flow is fed to the fluid bed along a continuous, longitudinal feeding line (34) on one or both sides of the fluid bed.

9. A process according to any one of preceding claims 1 to 8, wherein said first portion (F1) of the input fluid flow is fed to the fluid bed in discrete and predetermined feeding zones (Z'), aligned in a main flowing direction of the fluid bed, and alternate to non-feeding zones (Z") of the same fluid bed, said feeding zones (Z') acting substantially as wetting zones of the particulate material by the fluid flow, and said non-feeding zones (Z") acting substantially as drying and consolidation zones of the growing particles.

10. A process according to any one of the preceding claims, wherein a vortex condition is induced and maintained in the fluid bed; with a transversal vortex (V) or a double transversal vortex (V1, V2) arrangement, the axis of the vortex (V; V1, V2) being substantially parallel to a main flow direction of the fluid bed.

11. A granulation apparatus, adapted to operate according to the process of any one of claims 1 to 10.

12. A granulation apparatus according to claim 11, comprising at least a granulator (1) where said fluid bed is formed and maintained, and feeding means (30) of an input flow (F) containing a growth liquid, **characterized by** said feeding means comprising first feeding means (31) for directly feeding the granulator (1) with the growth liquid, and second feeding means (32) connected to a seed generator (33), said generator (33) being adapted to convert a portion of said input flow (F) into solid seeds (S1), the output of said seed generator (33) being connected to the granulator (1) and feeding said seeds (S1) to said granulator.
